# EUROPEAN PATENT APPLICATION

(11) **EP 2 557 203 A1**
(43) Date of publication of application: **13.02.2013**
(21) Application number: 10849439.4
(22) Date of filing: 07.04.2010
(51) Int. Cl.: C23C 28/02, C23C 18/31, C25D 5/00, H01M 4/88, H01M 4/90

(54) **CORE-SHELL METAL NANOPARTICLES, AND METHOD FOR PRODUCING CORE-SHELL METAL NANOPARTICLES**

(71) Applicant: TOYOTA JIDOSHA KABUSHIKI KAISHA, Aichi 471-8571 (JP)
(72) Inventor: ARAI, Tatsuya, Toyota-shi Aichi 471-8571 (JP); TAKEHIRO, Naoki, Toyota-shi Aichi 471-8571 (JP); IIO, Atsuo, Toyota-shi Aichi 471-8571 (JP); KIMURA, Hiroko, Toyota-shi Aichi 471-8571 (JP)
(74) Representative: Winter, Brandl, Fürniss, Hübner, Röss, Kaiser, Polte - Partnerschaft
(86) International application number: PCT/JP2010/056333
(87) International publication number: WO 2011/125195

(57) **Abstract**

An object of the present invention is to provide core-shell type metal nanoparticles having a high surface coverage of the core portion with the shell portion, and a method for producing the same.

Disclosed is core-shell type metal nanoparticles comprising a core portion and a shell portion covering the core portion, wherein the core portion comprises a core metal material selected from metals and alloys, and wherein the shell portion comprises an alloy of a first shell metal material and a second shell metal material.

## Description

### Technical Field

The present invention relates to core-shell type metal nanoparticles having a high surface coverage of the core portion with the shell portion, and a method for producing the same.

### Background Art

A fuel cell converts chemical energy directly to electrical energy by supplying a fuel and an oxidant to two electrically-connected electrodes and causing electrochemical oxidation of the fuel. Unlike thermal power generation, fuel cells are not limited by Carnot cycle, so that they can show high energy conversion efficiency. In general, a fuel cell is formed by stacking a plurality of single fuel cells each of which has a membrane electrode assembly as a fundamental structure, in which an electrolyte membrane is sandwiched between a pair of electrodes.

Platinum or platinum alloys have been used as an electrode catalyst for fuel cells. However, especially in the case of using platinum alloys, since metals present on the alloy surface other than platinum are eluted, there is a problem of a decrease in battery voltage during long-time operation of a fuel cell.
As a technique for preventing such catalyst metal elution, Patent Literature 1 discloses an electrode catalyst in which a noble metal alloy comprising a noble metal and a transition metal is supported on a carrier and which is an electrode catalyst characterized by that the surface of the noble metal alloy is covered with a noble metal film.

### Citation List

Patent Literature 1: Japanese Patent Application Laid-Open No. 2006-205088

### Summary of Invention

### Technical Problem

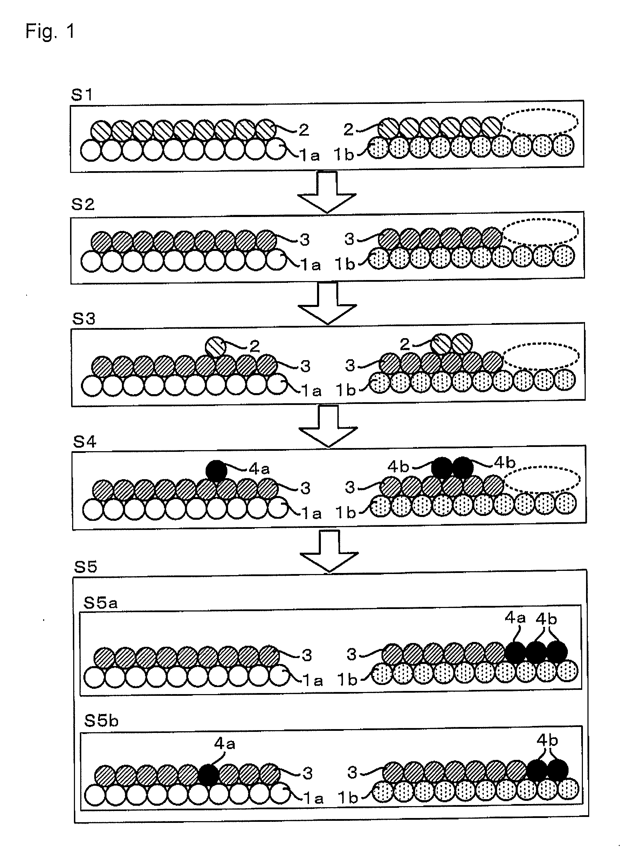

The electrode catalyst disclosed in Patent Literature 1 is not such that the whole surface of a noble metal alloy is completely covered with a noble metal film, as shown in Fig. 1 of the literature. Also, as disclosed in Table 1 of Examples, in the electrode catalyst disclosed in the literature, the composition ratio of a transition metal of the surface of catalyst particles is not 0; therefore, it is clear that the cores of the catalyst particles containing the transition metal, are exposed on the surface of the catalyst particles.
The present invention was achieved in view of the above circumstances. An object of the present invention is to provide core-shell type metal nanoparticles having a high surface coverage of the core portion with the shell portion, and a method for producing the same.

### Solution to Problem

The core-shell type metal nanoparticles of the present invention comprises a core portion and a shell portion covering the core portion, wherein the core portion comprises a core metal material selected from metals and alloys, and wherein the shell portion comprises an alloy of a first shell metal material and a second shell metal material.

In the core-shell type metal nanoparticles having such a structure, the core portion is covered with the shell portion; therefore, it is possible to prevent elution of the core portion.

In the core-shell type metal nanoparticles of the present invention, at least a {100} plane of the core metal material, which is exposed on the surface of the core portion, is preferably covered with the shell portion.

In the core-shell type metal nanoparticles having such a structure, the {100} plane of the core metal material is covered with the shell portion, the {100} plane being less likely to be covered with shell metal materials than {111} and {110} planes of the core metal material. Therefore, the coverage of the core portion with the shell portion relative to the total surface area of the core portion, is kept higher and it is thus possible to prevent elution of the core portion.

In the core-shell type metal nanoparticles of the present invention, the second shell metal material preferably has a higher standard electrode potential than that of the core metal material.

For example, when the core-shell type metal nanoparticles having such a structure is used as an electrode catalyst of a fuel cell, it is possible to prevent elution of the core portion caused by an electrochemical reaction.

An embodiment of the core-shell type metal nanoparticles of the present invention is that the core metal material is a material for forming a metal crystal having a crystal system that is a cubic system and a lattice constant of a=2.5 to 4.1 Å.

An embodiment of the core-shell type metal nanoparticles of the present invention is that the first shell metal material is a material for forming a metal crystal having a crystal system that is a cubic system and a lattice constant of a=3.8 to 4.0 Å.

An embodiment of the core-shell type metal nanoparticles of the present invention is that the second shell metal material is a material for forming a metal crystal having a crystal system that is a cubic system and a lattice constant of a=4.0 to 4.5 Å.

In the core-shell type metal nanoparticles of the present invention, a surface coverage of the core portion with the shell portion is preferably 0.01 to 1.

The core-shell type metal nanoparticles having such a structure can prevent elution of the core portion further.

An embodiment of the core-shell type metal nanoparticles of the present invention is that the core metal material is a metal material selected from the group consisting of palladium and alloys of palladium and the fourth period transition metals.

An embodiment of the core-shell type metal nanoparticles of the present invention is that the first shell metal material is a metal material selected from the group consisting of platinum, iridium, ruthenium, rhodium, a platinum-iridium alloy, a platinum-ruthenium alloy and a platinum-rhodium alloy.

An embodiment of the core-shell type metal nanoparticles of the present invention is that the second shell metal material is a metal material selected from the group consisting of gold, a gold-iridium alloy, a gold-platinum alloy and a gold-rhodium alloy.

An embodiment of the core-shell type metal nanoparticles of the present invention is that the core-shell type metal nanoparticles are supported by a carrier.

In the core-shell type metal nanoparticles of the present invention, the shell portion is preferably a monatomic layer of an alloy of the first and second shell metal materials.

The core-shell type metal nanoparticles having such a structure have higher catalytic activity and cost less than core-shell type fine particles comprising a shell portion made of two or more atomic layers.

The method for producing core-shell type metal nanoparticles according to the present invention is a method for producing core-shell type metal nanoparticles comprising a core portion comprising a core metal material and a shell portion covering the core portion, the method at least comprising: a step of preparing fine core particles comprising the core metal material, a first covering step of covering each of the fine core particles, which is the core portion, with a first shell metal material, and a second covering step of covering at least a {100} plane of the core metal material, which is exposed on the surface of the core portion, with any one of the first shell metal material and a second shell metal material.

In such a core-shell type metal nanoparticle production method, it is possible to cover a region of the surface of the core portion, which was not covered in the first covering step and is mainly such as the {100} plane of the core metal material exposed on the surface of the core portion, with the first and/or second shell metal material in the second covering step, thus producing core-shell type metal nanoparticles having a non-defective shell portion.

An embodiment of the core-shell type metal nanoparticle production method of the present invention is that the first covering step comprises at least the steps of: covering each of the fine core particles, which is the core portion, with a first monatomic layer, and replacing the first monatomic layer with a layer comprising the first shell metal material.

An embodiment of the core-shell type metal nanoparticle production method of the present invention is that the second covering step comprises at least the steps of: covering the core portion being covered with the first shell metal material, with a second monatomic layer, replacing the second monatomic layer with a layer comprising the second shell metal material, and covering at least the {100} plane of the core metal material exposed on the surface of the core portion by melting the layer comprising the second shell metal material, with any one of the first and second shell metal materials.

In such a core-shell type metal nanoparticle production method, by melting the layer comprising the second shell metal material, it is thus possible to readily cover the region of the surface of the core portion, which was not covered in the first covering step and is mainly such as the {100} plane of the core metal material exposed on the surface of the core portion, with the second shell metal material.

In the core-shell type metal nanoparticle production method of the present invention, the second shell metal material preferably has a lower melting point than those of the core metal material and the first shell metal material.

Such a core-shell type metal nanoparticle production method can prevent elution of the core metal material and the first shell metal material by selecting an appropriate temperature when, for example, melting the second shell metal material.

An embodiment of the core-shell type metal nanoparticle production method of the present invention is that the core metal material is a material for forming a metal crystal having a crystal system that is a cubic system and a lattice constant of a=2.5 to 4.1 Å.

An embodiment of the core-shell type metal nanoparticle production method of the present invention is that the first shell metal material is a material for forming a metal crystal having a crystal system that is a cubic system and a lattice constant of a=3.8 to 4.0 Å.

An embodiment of the core-shell type metal nanoparticle production method of the present invention is that the second shell metal material is a material for forming a metal crystal having a crystal system that is a cubic system and a lattice constant of a=4.0 to 4.5 Å.

An embodiment of the core-shell type metal nanoparticle production method of the present invention is that the core metal material is a metal material selected from the group consisting of palladium and alloys of palladium and the fourth period transition metals.

An embodiment of the core-shell type metal nanoparticle production method of the present invention is that the first shell metal material is a metal material selected from the group consisting of platinum, iridium, ruthenium, rhodium, a platinum-iridium alloy, a platinum-ruthenium alloy and a platinum-rhodium alloy.

An embodiment of the core-shell type metal nanoparticle production method of the present invention is that the second shell metal material is a metal material selected from the group consisting of gold, a gold-iridium alloy, a gold-platinum alloy and a gold-rhodium alloy.

### Advantageous Effects of Invention

In the core-shell type metal nanoparticles of the present invention, the core portion is covered with the shell portion; therefore, it is possible to prevent elution of the core portion. Also, according to the production method of the present invention, it is possible to cover a region of the surface of the core portion, which was not covered in the first covering step and is mainly such as the {100} plane of the core metal material exposed on the surface of the core portion, with the first and/or second shell metal material in the second covering step, thus producing core-shell type metal nanoparticles having a non-defective shell portion.

### Brief Description of Drawings

Fig. 1 is a view showing a transition of the covering state in the first and second covering steps.
Fig. 2 is a schematic sectional view showing an example of a system for Cu-UPD.
Fig. 3 shows an example of a reduction wave in a voltammogram obtained by Cu-UPD.

### Description of Embodiments

Hereinafter, to clarify explain the difference between the present invention and the prior art, the core-shell type metal nanoparticle production method of the present invention will be explained first. Thereafter, the core-shell type metal nanoparticles of the present invention will be explained.

### 1. The method for producing core-shell type metal nanoparticles

The core-shell type metal nanoparticle production method according to the present invention is a method for producing core-shell type metal nanoparticles comprising a core portion comprising a core metal material and a shell portion covering the core portion, the method at least comprising: a step of preparing fine core particles comprising the core metal material, a first covering step of covering each of the fine core particles, which is the core portion, with a first shell metal material, and a second covering step of covering at least a {100} plane of the core metal material, which is exposed on the surface of the core portion, with any one of the first shell metal material and a second shell metal material.

In the present invention, to describe a predetermined crystal plane of the metallic crystal, a combination of the chemical formula (in the case of a simple substance, chemical symbol) and predetermined crystal plane of the crystal is used, the formula showing the chemical composition of the crystal. For example, "Pd{100} plane" refers to the {100} plane of a palladium metallic crystal. In the present invention, equivalent crystal planes are each put in curly braces to describe. For example, (110) plane, (101) plane, (011) plane, (**0) plane, (*0*) plane and (0**) plane (numbers each represented by an asterisk (*) refer to "1 with an overbar") are all represented by {110} plane.

As described above, metals having high catalytic activity have been employed as the electrode catalyst for fuel cells, such as platinum and the like. However, despite the fact that platinum and the like are very expensive, catalysis takes place only on the surface of a platinum particle, and the inside of the particle rarely participates in catalysis. Therefore, the catalytic activity of the platinum catalyst is not necessarily high, relative its material cost.
To overcome such an issue, the inventors of the present invention have focused attention on core-shell type fine particles comprising a core portion and a shell portion covering the core portion. In the core-shell type fine particles, the inside of each particle, which rarely participates in catalysis, can be formed at a low cost by using a relatively inexpensive material for the core portion. When metals which can interact with each other are used as the core portion and shell portion, there is such an advantage that a higher catalytic activity is shown than when simple substance or a simple alloy is used as the core and shell portions.

However, as with the electrode catalyst disclosed in Patent Literature 1, especially in the field of fuel cells, core-shell type fine metal particles used as a catalyst has a low surface coverage of the core portion with the shell portion. The durability of such conventional core-shell type catalysts is decreased since the core portion is likely to be eluted in electrode reaction. Therefore, in the case of using such core-shell type catalysts, there is a possibility that the life of a fuel cell will be shortened.

The reason for the problem will be explained below, taking core-shell type metal nanoparticles as an example, comprising a single crystal of palladium as the core portion and a platinum monatomic layer as the shell portion. In the present invention, "monatomic layer" is a general term for single atomic layer and layers less than single atomic layer. Herein, "single atomic layer" refers to a one-atom-thick continuous layer, and "layers less than single atomic layer" refer to one-atom-thick discontinuous layers.
An example of the method for covering the low index planes of the single crystal of palladium with a platinum monatomic layer is a method comprising the steps of forming a copper monatomic layer on the low index planes of the single crystal of palladium and then replacing the copper monatomic layer with a platinum monatomic layer.
In the case where a palladium single crystal plane is covered with a copper monatomic layer by the Cu-under potential deposition method (hereinafter referred to as "Cu-UPD method") described below, it is reported that copper coverage of the surface of Pd{100} plane is 0.67 and copper coverage of the surface of Pd{111} plane and that of Pd{110} plane are 1 each (The New Energy and Industrial Technology Development Organization, Progress Report 2007-2008, "Strategic technology development of practical application of polymer electrolyte fuel cell, Next-generation technology development, Research and development of highly-active, ordered surface and metal nanoparticle catalyst," p. 28).
Therefore, in the case where palladium fine particles having Pd{111} and Pd{110} planes as well as a Pd{100} plane on the surface thereof, is used as a core metal material which is a raw material for the core-shell type metal nanoparticles, copper coverage of the core metal material relative to the total surface area of the core metal material, is presumed to be less than 1 after Cu-UPD. Therefore, after replacing the copper monatomic layer with a platinum monatomic layer, platinum coverage of the core metal material relative to the total surface area of the core metal material, is presumed to be automatically less than 1.
As a result, core-shell type metal nanoparticles in which the core portion comprising palladium, which is more likely to be eluted than platinum, is exposed on the surface thereof. In a fuel cell using the core-shell type metal nanoparticles as a fuel cell catalyst, the core portion is likely to be eluted during operation of the fuel cell; therefore, the durability of the catalyst is decreased and thus there is a possibility that the life of the fuel cell is shortened.

As the result of diligent researches, the inventors of the present invention have found that by covering fine core particles with a shell in at least two stages, it is possible to produce core-shell type metal nanoparticles in which there are less convexoconcaves on the surface and the core portion is completely covered. Therefore, the inventors completed the present invention based on the above knowledge.

The present invention comprises (1) a step of preparing fine core particles, (2) a first covering step of covering the core portion with a first shell metal material, and (3) a second covering step of covering at least a part of the core portion with the first and/or second shell metal material. The present invention is not necessarily limited to the three steps only, and in addition to the three steps, the method can comprise a filtration/washing step, a drying step, a pulverization step, etc., which will be described below.
Hereinafter, the above steps (1) to (3) and other steps will be described in order.

### 1-1. The step of preparing fine core particles

This is a step of preparing fine core particles comprising the core metal material.
As the fine core particles, there may be prepared fine particles having in a small percentage the area of a {100} plane of the core metal material on the surface thereof. As the method for producing fine core particles which selectively have crystal planes other than {100} plane of the core metal material on the surface thereof, conventionally known methods can be employed.
For example, a reference (Norimatsu et al., Shokubai, vol. 48 (2), 129 (2006)) and so on disclose a method for producing fine palladium particles in which a Pd{111} plane is selectively present on the particle surface.
As the method for measuring crystal planes on the surface of fine core particles, for example, there may be mentioned a method for observing several sites on the surface of the fine core particles by TEM.

As the core metal material, there may be used a material for forming a metal crystal having a crystal system that is a cubic system and a lattice constant of a=2. 5 to 4.1 Å. Examples of such a metal material include metal materials such as palladium and alloys of palladium and the fourth period transition metals. Examples of the alloys of palladium and the fourth period transition metals include a palladium-cobalt alloy, a palladium-copper alloy and a palladium-vanadium alloy. In the present invention, it is preferable to use palladium as the core metal material.

The average particle diameter of the fine core particles is not particularly limited as long as it is equal to or less than the average particle diameter of the above-mentioned core-shell type metal nanoparticles.
However, when palladium particles are used as the fine core particles, the larger the average particle diameter of the palladium particles, the higher the ratio of the area of a Pd{111} plane exposed on the surface of each particle. This is because Pd{111} plane is the most chemically stable crystal plane among Pd{111}, Pd{110} and Pd{100} planes. Therefore, when palladium particles are used as the core particles, it is preferable that the palladium particles have an average particle diameter of 8 to 100 nm.
The larger the particle diameter, the larger the surface activity of each palladium fine particle. On the other hand, the larger the particle diameter, the smaller the surface area of each palladium fine particle with respect to the mass of the same. Therefore, considering a particle diameter range which offers a good balance between surface activity and surface area, and from the point of view that the surface activity of one palladium particle to the cost per palladium particle is high, it is more preferable that the palladium particles have an average particle diameter of 8 to 20 nm.
The average particle diameter of the particles of the present invention is calculated by a conventional method. An example of a method for calculating the average particle diameter of the particles is as follows: first, for one particle shown in a transmission electron microscope (TEM) image taken at 400,000 or 1,000,000-fold magnification, the particle diameter is calculated on the supposition that the particle is spherical. This particle diameter calculation by TEM observation is performed on 200 to 300 particles of the same type and the average of these particles is deemed as the average particle diameter.

### 1-2. The first covering step of covering the core portion with the first shell metal material

This step is a step of covering each of the fine core particles, which is the core portion, with the first shell metal material.
The first covering step can be performed through a one-step reaction or multiple-step reaction.
Hereinafter, there will be mainly described an example of the covering of the core portion with the shell portion through a two-step reaction.

As the first covering step which occurs through a two-step reaction, for example, there may be mentioned one comprising at least the steps of: covering each of the fine core particles, which is the core portion, with a first monatomic layer, and replacing the first monatomic layer with a layer comprising the first shell metal material.

A specific example of the above is a method comprising the steps of preliminarily forming a monatomic layer on the surface of the core portion by underpotential deposition and replacing the monatomic layer with a layer comprising the first shell metal material. As the underpotential deposition, Cu-UPD is preferably used.
Particularly when palladium particles are used as the fine core particles and platinum is used for the shell portion, core-shell type metal nanoparticles with a high platinum coverage and excellent durability can be produced by Cu-UPD. This is because, as described above, copper can be precipitated on the Pd{111} plane and/or Pd{110} plane by Cu-UPD at a surface coverage of 1. As described above, copper coverage of the surface of the Pd{100} plane is 0.67; therefore, the Pd{100} plane cannot be completely covered with copper by Cu-UPD.

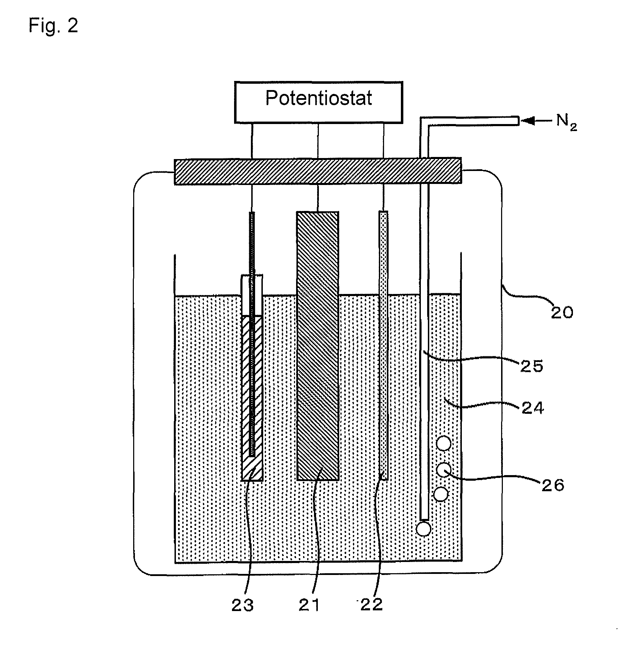

Hereinafter, a specific example of Cu-UPD will be described. First, a powder of palladium or palladium alloy supported by an electroconductive carbon material (hereinafter referred to as Pd/C) is dispersed in water and filtered to obtain a Pd/C paste, and the paste is applied onto a working electrode of an electrochemical cell. The Pd/C paste can be attached onto the working electrode, using an electrolyte such as Nafion (trademark) as a binder. For the working electrode, a platinum mesh or glassy carbon can be used.
Next, a copper solution is added to the electrochemical cell. In the copper solution, the working electrode, a reference electrode and a counter electrode are immersed, and a copper monatomic layer is precipitated on the surface of the palladium particles by Cu-UPD.
As shown in Fig. 2, a Cu-UPD system is broadly divided into cell 20 in which a copper solution and electrodes are housed, and a potentiostat for voltage and current control. Inside cell 20, working electrode 21 having the Pd/C paste applied or attached thereto, counter electrode 22 and reference electrode 23 are disposed so that they are sufficiently immersed in copper solution 24. These three electrodes are electrically connected to the potentiostat. Nitrogen introduction pipe 25 is disposed to be immersed in copper solution 24 so that nitrogen is bubbled into copper solution 24 for a fixed time from a nitrogen supply source (not shown) provided outside the cell to saturate the copper solution with nitrogen. Circles 26 represent nitrogen bubbles.
A specific example of the condition of Cu-UPD is as follows:
Copper solution: Mixed solution of 0.05 mol/L of CuSO₄ and 0.05 mol/L of H₂SO₄ (Nitrogen is bubbled thereinto)
Atmosphere: under a nitrogen atmosphere
Sweep rate: 0.2 to 0.01 mV/sec
Potential: After the potential is swept from 0.8 V (vs RHE) to 0.156 V (vs RHE), it is clamped at 0.156 V (vs RHE).
Voltage clamp time: 1 second to 10 minutes
The clamped potential is only needed to be a potential just before a peak showing a large amount of copper deposition. Therefore, the clamped potential is not necessarily limited to the above-mentioned 0.156 V, and it ranges from about 0.05 to 0.2 V.

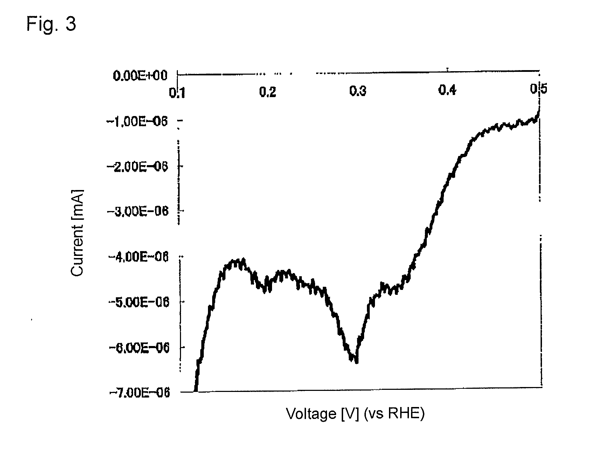

Fig. 3 shows a reduction wave in a voltammogram obtained by Cu-UPD in the system shown in Fig. 2 using a platinum electrode as the counter electrode, a silver-silver chloride electrode as the reference electrode, and a current sweeping condition of 5 mV/min (that is, 0.08 mV/sec). In the voltammogram, the graph corresponding to a current in the range of 0 to -1.4×10⁻⁶ mA indicates the presence of an electrical double layer.
In the voltammogram, the peak corresponding to a potential in the range of 0.256 to 0.156 V is a peak which indicates that only one monatomic layer of copper was precipitated on palladium fine particles. Therefore, when the potential is clamped in the above range, one monatomic layer of copper or less is precipitated on palladium fine particles. At a potential of less than 0.3 V, two or more layers of copper, that is, a large amount of copper is precipitated on palladium fine particles.

After the above voltage clamp time is passed, the working electrode is promptly immersed in a platinum solution to replace copper with platinum by displacement plating, utilizing the difference in ionization tendency. The displacement plating is preferably performed under an inert gas atmosphere such as a nitrogen atmosphere. The platinum solution is not particularly limited. For example, a platinum solution obtained by dissolving K₂PtCl₄ in 0.1 mol/L of HClO₄ can be used. The platinum solution is sufficiently agitated, and nitrogen is bubbled into the solution. The length of the displacement plating time is preferably 90 minutes or more.
Core-shell type metal nanoparticles are obtained by the displacement plating, in which a monatomic layer of platinum is precipitated on the surface of the palladium particles.

As the first shell metal material, there may be used a material for forming a metal crystal having a crystal system that is a cubic system and a lattice constant of a=3.8 to 4.0 Å. Examples of such a metal material include metal materials such as platinum, iridium, ruthenium, rhodium, a platinum-iridium alloy, a platinum-ruthenium alloy and a platinum-rhodium alloy. Among them, platinum is preferred as the first shell metal material.

Particularly preferred is a combination of using palladium or a palladium alloy as the fine core particles and using platinum as the first shell metal material. Platinum has excellent catalytic activity, especially excellent oxygen reduction reaction (ORR) activity. While platinum has a lattice constant of 3.92 Å, palladium has a lattice constant of 3.89 Å and the lattice constant of palladium is a value which is in the range of the lattice constant of platinum plus or minus 5% (±5%). Therefore, no lattice mismatch occurs between platinum and palladium, and palladium is fully covered with platinum.

### 1-3. The second covering step of covering at least a part of the core portion with the first and/or second shell metal material

This step is a step of covering at least the {100} plane of the core metal material, which is exposed on the surface of the core portion, with the first and/or second shell metal material.
The core portion to be covered in this step is such that the whole {111} and {110} planes of the core metal material and about 70% of the {100} plane of the core metal material , all of which planes being exposed on the surface of the core portion, have been already covered with the first shell metal material in the above-mentioned first covering step. Therefore, this second covering step aims to completely cover about 30% of the {100} plane of the core metal material, which were not covered in the first covering step.
As well as the first covering step, the second covering step can be performed through a one-step reaction or multiple-step reaction.
Hereinafter, there will be mainly described an example of the covering of the core portion with the shell portion through a two-step reaction.

As the second covering step which occurs through a two-step reaction, for example, there may be mentioned one comprising at least the steps of: covering the core portion being covered with the first shell metal material, with a second monatomic layer, replacing the second monatomic layer with a layer comprising the second shell metal material, and covering at least the {100} plane of the core metal material exposed on the surface of the core portion by melting the layer comprising the second shell metal material, with the first and/or second shell metal material.

A specific example of the above is a method comprising the steps of, as well as the first covering step, preliminarily forming a monatomic layer on the surface of the core portion by underpotential deposition, replacing the monatomic layer with a layer comprising the second shell metal material, and melting the layer comprising the second shell metal material. As the underpotential deposition, Cu-UPD is preferably used.

The specific method for precipitating a monatomic layer by Cu-UPD is as explained above. In this second covering step, it is preferably to precipitate copper only on the uncovered area of the surface of the core portion. Especially in the case where gold is used as the second shell metal material in the below-described displacement plating and there is an increase in the content of gold with respect to the total amount of the shell, the catalytic activity of the thus-produced core-shell type metal nanoparticles can be low. Actually, it is better to preliminarily measure the ratio of plane indices of the fine core particles to be used and then preliminarily calculate the amount of copper required in the second covering step.

The method of replacing the monatomic layer with the layer comprising the second shell metal material will be explained below, using the case where gold is used as the second shell metal material as an example.
After the coating with copper by Cu-UPD is completed, the working electrode is promptly immersed in a gold solution to replace copper with gold by displacement plating, utilizing the difference in ionization tendency. The displacement plating is preferably performed under an inert gas atmosphere such as a nitrogen atmosphere. The gold solution is not particularly limited. For example, solutions such as AuCl₃ and HAuCl₄ are usable. The gold solution is sufficiently agitated, and then nitrogen is bubbled into the solution. The length of the displacement plating time is preferably 90 minutes or more.
Core-shell type metal nanoparticles are obtained by the displacement plating, in which a monatomic layer of gold is precipitated mainly on the first shell metal material on the surface of the palladium particles.

After the displacement plating, the binder containing catalyst powder is removed from the working electrode and fired to melt the layer comprising the second shell metal material. The firing temperature is preferably a temperature which is equal to or more than the melting temperature of the second shell metal material and which is less than the melting temperature of the core metal material.
From the point of view that it is possible to prevent elution of the core metal material and the first shell metal material in this firing step at an appropriate temperature, the second shell metal material preferably has a lower melting point than those of the core metal material and the first shell metal material. In particular, it is particularly preferable that the melting point of the second shell metal material is equal to or less than the temperature obtained by deducting 100°C from the melting point of the core metal material and also is equal to or less than the temperature obtained by deducting 100°C from the melting point of the first shell metal material.

The method for melting the layer comprising the second shell metal material will be explained hereinafter, taking the following case an example: palladium is used as the fine core particles, platinum is used as the first shell metal material, and gold is used as the second shell metal material. Gold has a melting point of 1,064°C, while palladium has a melting point of 1,552°C and platinum has a melting point of 1,769°C. The melting point of gold is lower than those of palladium and platinum.
In this example, since the melting point of gold is lower than those of palladium and platinum, gold is fluidized in the temperature range in which palladium and platinum are not fluidized and melts into the platinum layer. As a result, Pd{100} planes not covered in the first covering step are covered, physically. Such a phenomenon is due to that sphere particles having no convexoconcaves is more thermodynamically stable than particles having convexoconcaves. When palladium is fluidized and exposed on the particle surface, the durability and/or catalytic activity of the whole particles can be decreased. Therefore, it is preferable that only gold is fluidized and melts into the platinum layer.
In this example, it is preferable to fire the catalyst powder at 350°C to 1,540°C. 350°C is a temperature which is lower than the melting point of gold. However, the particles fired in this example is as very small as 2 to 10 nm, so that gold fluidization is considered to start at temperatures lower than the melting point of bulk gold.

As the second shell metal material, there may be used a material for forming a metal crystal having a crystal system that is a cubic system and a lattice constant of a=4.0 to 4.5 Å. Examples of such a metal material include metal materials such as gold, a gold-iridium alloy, a gold-platinum alloy and a gold-rhodium alloy. Among them, it is preferable to use gold as the second shell metal material.

A particularly preferable combination is the use of palladium or a palladium alloy as the fine core particles, platinum as the first shell metal material, and gold as the second shell metal material. The standard electrode potential of gold (1.52V) is the highest than the standard electrode potential of palladium (0.915V) and that of platinum (1.188V). Thus, gold is not melted during the operation of a fuel cell which is generally operated at 1V or less. Therefore, the core-shell type metal nanoparticles covered with a gold alloy have excellent durability. As described above, since the melting point of gold is lower than those of palladium and platinum, there is no possibility that palladium is fluidized and exposed on the particle surface. Therefore, it is possible to melt only gold, efficiently.

Fig. 1 is a schematic view showing a transition of the covering state in the first and second covering steps. White arrows shown between rectangles S1 to S5 indicate that the covering state is changed from S1 to S5. Inside rectangles S1 to S5, the state of an interface between the core portion and the shell portion is represented by circles arranged in two or three rows. Among the circles, those in the lowest row represent atoms which are present in the core-shell interface and constitute the core portion, while circles in the upper or middle row represent atoms which are present in the core-shell interface and constitute the shell portion. Circles in the left column shown inside rectangles S1 to S5 represent the covering state of {111} and {110} planes of the core metal material, while circles in the right column represent the covering state of a {100} plane of the core metal material. Circles with the same pattern represent atoms of the same element.

Fig. 1 will be explained hereinafter, taking the following case as an example: palladium is used as the fine core particles; platinum is used as the first shell metal material; gold is used as the second shell metal material; and after a copper monatomic layer is formed by Cu-UPD, it is subj ected to displacement plating.
First, when a copper monatomic layer is formed on fine palladium particles by Cu-UPD in the first covering step, copper atoms 2 are precipitated on palladium atoms 1a and palladium atoms 1b, the palladium atoms 1a constituting Pd{111} and Pd{110} planes, and the palladium atoms 1b constituting a Pd{100} plane (S1). At this time, copper atoms 2 are precipitated entirely over the Pd{111} and Pd{110} planes. However, as the region indicated by a dashed circle, a region in which copper atoms 2 are not precipitated is present on the Pd{100} plane. Therefore, convexoconcaves are present on the surface of core-shell type metal nanoparticles.
Even after copper atoms 2 are replaced with platinum atoms 3 by displacement plating, a region which is not covered with platinum atoms 3 remains on the Pd{100} plane (S2).

Next, when a copper monatomic layer is formed by Cu-UPD in the second covering step, copper atoms 2 are precipitated on platinum atoms 3 (S3). It is considered there is sometimes a case where copper atoms 2 are directly precipitated on a part of the region indicated by dashed circle (not shown in Fig. 1).
In addition, when copper atoms 2 are replaced with gold atoms 4 by displacement plating, a region which is not covered with gold atoms 4 remains on the Pd{100} plane (S4). For the sake of simplicity, gold atoms 4 shown in Fig. 1 are differentiated into gold atoms 4a and 4b, the gold atom 4a covering the Pd{111} and Pd{110} planes, while the gold atoms 4b covering the Pd{100} plane.

Finally, catalyst particles are fired to melt gold atoms 4; therefore, the entire surface of the fine palladium particles is covered with platinum and gold atoms and convexoconcaves on the surface of the core-shell type metal nanoparticles are eliminated (S5). Here, two cases can arise. In the first case, due to the melting of gold atoms 4, gold atoms 4a and 4b are fluidized on platinum atoms 3 to fall into a concave on the Pd{100} plane (S5a). In the second case, gold atom 4a is melted and put between platinum atoms 3 to fluidize the platinum atom layer, while a concave on the Pd{100} plane is covered with gold atoms 4b (S5b). In both cases, core-shell type metal nanoparticles are produced, in which the surface of fine palladium particles is covered with a monatomic layer of an alloy of platinum and gold.

### 1-4. Other steps

Before the step of preparing the fine core particles, the fine core particles can be supported by a carrier. As the method for supporting the core particles by a carrier, conventionally used methods can be employed.
After the step of covering the core portion with the shell portion, there may be performed filtration/washing, drying and pulverization of the core-shell type metal nanoparticles.
The filtration/washing of the core-shell type metal nanoparticles is not particularly limited as long as it is a method that can remove impurities without damage to the core-shell structure of the particles produced. An example of the filtration/washing is separation by performing suction and filtration with the use of pure water as a solvent and a paper filter (#42 manufactured by Whatman).
The drying of the core-shell type metal nanoparticles is not particularly limited as long as it is a method that can remove a solvent, etc. An example of the drying is vacuum drying for 16 hours in the condition of a temperature of 80°C.
The pulverizing of the core-shell type metal nanoparticles is not particularly limited as long as it is a method that can pulverize solid contents. Examples of the pulverization include pulverization using a mortar, etc., and mechanical milling using a ball mill, a turbo mill, mechanofusion, a disk mill, etc.

### 2. Core-shell type metal nanoparticles

The core-shell type metal nanoparticles of the present invention comprising a core portion and a shell portion covering the core portion, wherein the core portion comprises a core metal material selected from metals and alloys, and wherein the shell portion comprises an alloy of a first shell metal material and a second shell metal material.

In the core-shell type metal nanoparticles of the present invention, the core portion is covered with an alloy of two kinds of metal materials. Therefore, it is possible to prevent elution of the core portion by controlling the properties of the alloy. The core-shell type metal nanoparticles of the present invention have excellent durability, particularly to electrochemical reactions, so that they can be used as an electrode catalyst for fuel cells.
The core-shell type metal nanoparticles of the present invention can be produced by the above-described production method.

The {100} plane of the core metal material is less likely to be covered with shell metal materials than the {111} and {110} planes of the core metal material. Therefore, by covering at least the {100} plane of the core metal material, which is exposed on the surface of the core portion, with the shell portion, the coverage of the core portion with the shell portion relative to the total surface area of the core portion, is kept higher, and it is thus possible to prevent elution of the core portion.
It is particularly preferable that any of the {111}, {110} and {100} planes of the core metal material, which are exposed on the surface of the core portion, is covered with the shell portion.

From the point of view that it is possible to, when using the core-shell type metal nanoparticles as an electrode catalyst of a fuel cell, etc., prevent the core portion from being eluted by an electrochemical reaction, the second shell metal material preferably has a higher standard electrode potential than that of the core metal material. It is more preferable that the standard electrode potentials of the first and second shell metal materials are higher than the standard electrode potential of the core metal material.

From the point of view that it is possible to inhibit the elution of the core portion further, the surface coverage of the core portion with the shell portion is preferably 0.01 to 1.
If the surface coverage of the core portion with the shell portion is less than 0.01, the core portion is eluted by an electrochemical reaction, so that there is a possibility that the core-shell type metal nanoparticles are deteriorated. The surface coverage of the core portion with the shell portion is more preferably 0.8 to 1, still more preferably 0.9 to 1.

"Surface coverage of the core portion with the shell portion" means a ratio of the area of the core portion which is covered with the shell portion, with the premise that the total surface area of the core portion is 1. As the method for calculating the surface coverage, for example, there may be mentioned a method comprising the steps of observing several sites on the surface of the core-shell type metal nanoparticles by means of a TEM and calculating the ratio of the area of the core portion, which is confirmed by the observation to be covered with the shell portion, to the whole observed area.
Also, it is possible to calculate the surface coverage of the core portion with the shell portion by investigating components that are present on the outermost surface of the core-shell type metal nanoparticles by X-ray photoelectron spectroscopy (XPS) or time of flight secondary ion mass spectrometry (TOF-SIMS), etc.

As the core metal material, it is preferable to use the metal material described under "1. The method for producing core-shell type metal nanoparticles."
As the first and second shell metal materials constituting the shell portion, it is preferable to use the metal materials described under "1. The method for producing core-shell type metal nanoparticles."

In the core-shell type metal nanoparticles of the present invention, the shell portion is preferably a monatomic layer of an alloy of the first and second shell metal materials. Such particles are advantageous in that the catalytic activity of the shell portion is extremely higher and the material cost is lower because the covering amount of the shell portion is small, compared with a core-shell type catalyst having a shell portion comprising two or more atomic layers.

The core-shell type metal nanoparticles of the present invention preferably have an average particle diameter of 8 to 100 nm, more preferably 8 to 20 nm. Because the shell portion of the core-shell type metal nanoparticles is preferably a monatomic layer, the shell portion preferably has a thickness from 0.17 to 0.23 nm. Therefore, the thickness of the shell portion is negligible relative to the average particle diameter of the core-shell type metal nanoparticles, and it is preferable that the average particle diameter of the core portion is almost equal to that of the core-shell type metal nanoparticles.

The core-shell type metal nanoparticles of the present invention can be supported by a carrier. Particularly in the case of using the core-shell type metal nanoparticles for a catalyst layer of a fuel cell, from the viewpoint of imparting electroconductivity to the catalyst layer, the carrier is preferably an electroconductive material.
Specific examples of the electroconductive material which can be used as the carrier include: electroconductive carbon materials including carbon particles such as Ketjen Black (product name; manufactured by: Ketjen Black International Company), VULCAN (product name; manufactured by: Cabot Corporation), Norit (product name; manufactured by: Norit Nederland BV), BLACK PEARLS (product name; manufactured by: Cabot Corporation) and Acetylene Black (product name; manufactured by: Chevron Corporation) and carbon fibers; and metal materials such as metal particles and metal fibers.

### Reference Signs List

1a. Palladium atoms constituting Pd{111} and {110} planes
1b. Palladium atoms constituting Pd{100} plane
2. Copper atoms
3. Platinum atoms
4a. Gold atom covering Pd{111} and Pd{110} planes
4b. Gold atoms covering Pd{100} plane
20. CV cell
21. Working electrode
22. Counter electrode
23. Reference electrode
24. Copper solution
25. Nitrogen introduction pipe
26. Nitrogen bubbles

## Claims

1. Core-shell type metal nanoparticles comprising a core portion and a shell portion covering the core portion,
wherein the core portion comprises a core metal material selected from metals and alloys, and
wherein the shell portion comprises an alloy of a first shell metal material and a second shell metal material.

2. The core-shell type metal nanoparticles according to claim 1, wherein at least a {100} plane of the core metal material, which is exposed on the surface of the core portion, is covered with the shell portion.

3. The core-shell type metal nanoparticles according to claim 1 or 2, wherein the second shell metal material has a higher standard electrode potential than that of the core metal material.

4. The core-shell type metal nanoparticles according to any one of claims 1 to 3, wherein the core metal material is a material for forming a metal crystal having a crystal system that is a cubic system and a lattice constant of a=2.5 to 4.1 Å.

5. The core-shell type metal nanoparticles according to any one of claims 1 to 4, wherein the first shell metal material is a material for forming a metal crystal having a crystal system that is a cubic system and a lattice constant of a=3.8 to 4.0 Å.

6. The core-shell type metal nanoparticles according to any one of claims 1 to 5, wherein the second shell metal material is a material for forming a metal crystal having a crystal system that is a cubic system and a lattice constant of a=4.0 to 4.5 Å.

7. The core-shell type metal nanoparticles according to any one of claims 1 to 6, wherein a surface coverage of the core portion with the shell portion is 0.01 to 1.

8. The core-shell type metal nanoparticles according to any one of claims 1 to 7, wherein the core metal material is a metal material selected from the group consisting of palladium and alloys of palladium and the fourth period transition metals.

9. The core-shell type metal nanoparticles according to any one of claims 1 to 8, wherein the first shell metal material is a metal material selected from the group consisting of platinum, iridium, ruthenium, rhodium, a platinum-iridium alloy, a platinum-ruthenium alloy and a platinum-rhodium alloy.

10. The core-shell type metal nanoparticles according to any one of claims 1 to 9, wherein the second shell metal material is a metal material selected from the group consisting of gold, a gold-iridium alloy, a gold-platinum alloy and a gold-rhodium alloy.

11. The core-shell type metal nanoparticles according to any one of claims 1 to 10, being supported by a carrier.

12. The core-shell type metal nanoparticles according to any one of claims 1 to 11, wherein the shell portion is a monatomic layer of an alloy of the first and second shell metal materials.

13. A method for producing core-shell type metal nanoparticles comprising a core portion comprising a core metal material and a shell portion covering the core portion,
the method at least comprising:
a step of preparing fine core particles comprising the core metal material,
a first covering step of covering each of the fine core particles, which is the core portion, with a first shell metal material, and
a second covering step of covering at least a {100} plane of the core metal material, which is exposed on the surface of the core portion, with any one of the first shell metal material and a second shell metal material.

14. The method for producing core-shell type metal nanoparticles according to claim 13,
wherein the first covering step comprises at least the steps of:
covering each of the fine core particles, which is the core portion, with a first monatomic layer, and
replacing the first monatomic layer with a layer comprising the first shell metal material.

15. The method for producing core-shell type metal nanoparticles according to claim 13 or 14,
wherein the second covering step comprises at least the steps of:
covering the core portion being covered with the first shell metal material, with a second monatomic layer,
replacing the second monatomic layer with a layer comprising the second shell metal material, and
covering at least the {100} plane of the core metal material exposed on the surface of the core portion by melting the layer comprising the second shell metal material, with any one of the first and second shell metal materials.

16. The method for producing core-shell type metal nanoparticles according to any one of claims 13 to 15, wherein the second shell metal material has a lower melting point than those of the core metal material and the first shell metal material.

17. The method for producing core-shell type metal nanoparticles according to any one of claims 13 to 16, wherein the core metal material is a material for forming a metal crystal having a crystal system that is a cubic system and a lattice constant of a=2.5 to 4.1 Å.

18. The method for producing core-shell type metal nanoparticles according to any one of claims 13 to 17, wherein the first shell metal material is a material for forming a metal crystal having a crystal system that is a cubic system and a lattice constant of a=3.8 to 4.0 Å.

19. The method for producing core-shell type metal nanoparticles according to any one of claims 13 to 18, wherein the second shell metal material is a material for forming a metal crystal having a crystal system that is a cubic system and a lattice constant of a=4.0 to 4.5 Å.

20. The method for producing core-shell type metal nanoparticles according to any one of claims 13 to 19, wherein the core metal material is a metal material selected from the group consisting of palladium and alloys of palladium and the fourth period transition metals.

21. The method for producing core-shell type metal nanoparticles according to any one of claims 13 to 20, wherein the first shell metal material is a metal material selected from the group consisting of platinum, iridium, ruthenium, rhodium, a platinum-iridium alloy, a platinum-ruthenium alloy and a platinum-rhodium alloy.

22. The method for producing core-shell type metal nanoparticles according to any one of claims 13 to 21, wherein the second shell metal material is a metal material selected from the group consisting of gold, a gold-iridium alloy, a gold-platinum alloy and a gold-rhodium alloy.
